# EUROPEAN PATENT APPLICATION

(11) **EP 1 686 796 A1**
(43) Date of publication of application: **02.08.2006**
(21) Application number: 05290031.3
(22) Date of filing: 05.01.2005
(51) Int. Cl.: H04N 5/445, G06F 3/16

(54) **Electronic program guide presented by an avatar featuring a talking head speaking with a synthesized voice**

(71) Applicant: ALCATEL, 75008 Paris (FR)
(72) Inventor: Baekeland, Rony, 2000 Antwerpen (BE); Moons, Jan, 2220 Heist-Op-Den-Berg (BE); Coppens, Toon, 2500 Lier (BE)
(74) Representative: Rausch, Gabriele

(57) **Abstract**

A method for providing program information about broadcasts on at least one TV-Channel to a user is described, wherein a synthesized voice is used to present the program information to the user, wherein an avatar optionally to be shown on a TV-Screen features a talking head speaking with the synthesized voice and wherein the program information and the optional appearing of the avatar on the TV-Screen is independent from the TV-Channel the user is watching, plus a device for providing program information about broadcasts on at least one TV-Channel to a user via a TV-Set, wherein the device comprises at least means to get program information, means to transform said program information into a synthesized voice to be played back on a TV-Set, means to generate an avatar featuring a talking head speaking with the synthesized voice and optionally to be shown on a TV-Screen and means to superpose the avatar and the synthesized voice with the playback of at least the TV-Channel the user is watching.

## Description

### Technical field:

The invention relates to a method for providing program information about broadcasts on at least one TV-Channel to a user according to the specifying features of Claim 1 plus a device for providing program information about broadcasts on at least one TV-Channel to a user via a TV-Set according to the specifying features of Claim 14.

### Background of the invention:

Today a lot of TV-Programs comprising a lot of broadcasts like TV-Shows, movies and entertainment are available for a user. Nearly at any time a special program or a special broadcast matching the particular interest of any user is broadcasted on any TV-Channel. The only problem is that the user has to know which channel provides at what time a broadcast matching his interests.

On the one hand, regarding the huge amount of TV-Channels with their numerous programs, conventional, in particular printed program guides cannot meet the demands on providing quickly available information about the TV-Program adapted on individual needs.

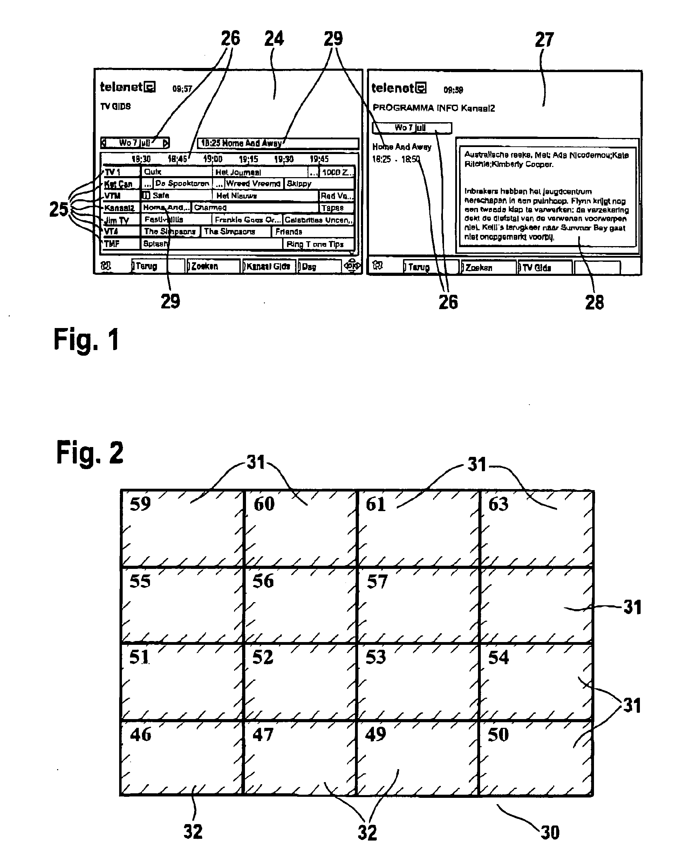

To solve this problem so called Electronic Program Guides, EPG are known. An EPG has a computer like interface, e.g. like an Internet browser, comprising several levels 24, 27 to be browsed by the user. Each superior level 24 contains an overview over the next subordinated levels 27. Figure 1 shows an example of an EPG according to the state of the art. On the left side of Figure 1 a superior level 24 showing program information about several TV-Channels 25 at a specific time 26 is shown. On the right side of Figure 1 a subordinated level 27 showing more specific information 28 about a particular TV-Show 29 selected on the superior level 24 is shown.

To browse an EPG the user needs experience in working with a computer like interface particularly regarding the browsing through many menus and sub-menus.

However, not any user is familiar with applications to be operated like a computer program. Not everybody is used to work with a computer-like application, e.g. elderly, children and so on. To operate these applications by using a TV-Remote Control might be more familiar to the users but is very complicated.

Another drawback of this solution is that the EPG does not give a TV-Experience to the user. Too many information to be read is provided to the user at the same time. The user wants to watch TV and not to read a lot of program information until finding what he is looking for. An additional drawback of the EPG is, that visually impaired users cannot use it.

For browsing TV-Channels it is known to use a so-called TV-Mosaic showed in Figure 2. The TV-Mosaic subdivides the display of the TV-Screen 30 into a specific number of small windows 31 each showing a screenshot of a certain TV-Channel 32. By using the TV-Mosaic, the actual program on certain TV-Channels can be seen without getting more information about the particular program like e.g. actors, content, duration, etc. The information provided by the TV-Mosaic is only useful for a user who knows what is played in a specific program.

On the other hand, the user is also accustomed to a talking head announcing the following TV-Program.

The drawback of a human newsreader or a human TV presenter, commonly known as talking head is, that he is only available at the time scheduled by the broadcaster. Thereby, every TV-Channel has its own presenters and newsreaders. The human talking head is not available on request and informs the user only about the following program of a particular TV-Channel. He cannot inform the user about the beginning of a program on another TV-Channel or automatically starting the recording e.g. of the favorite soap of the user at the time the user is watching another channel.

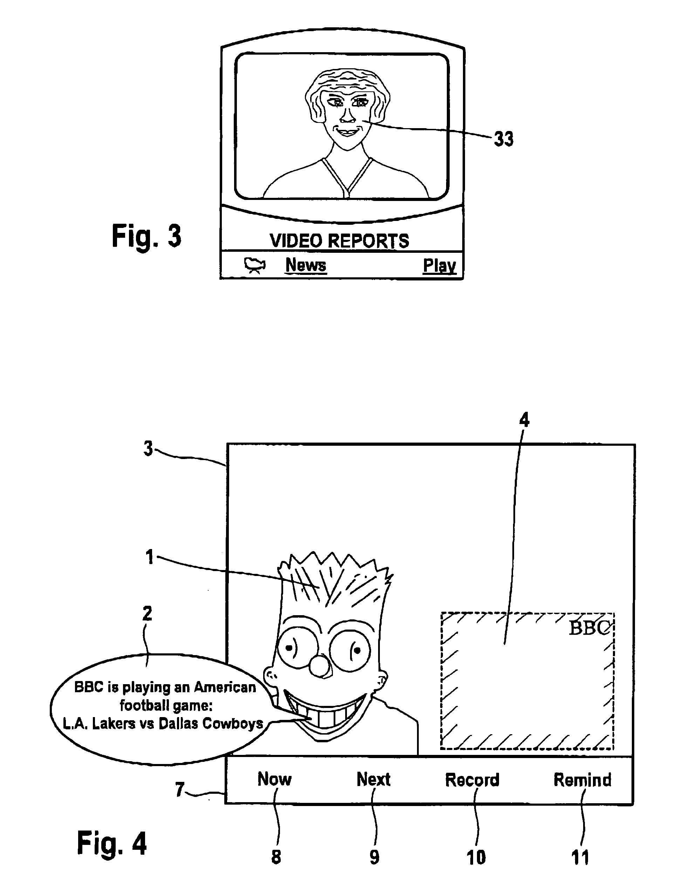

Similar problems are well known especially regarding news portals on the web. There information, e.g. news has to be provided to the users at any time on demand. For increasing the acceptability and the usability of the service provided by a news portal, virtual newsreaders are known, that read the latest news to the user by using a text to speech converter. An example of a virtual newsreader 33 is shown in Figure 3. The drawback of this solution is, that the virtual newsreader 33 is only available for web applications. The virtual newsreader is only used to convert the content of a specific resource database into speech. The user cannot adapt the content to the information he is interested in. Furthermore it is not possible to change the character of the virtual newsreader 33, e.g. from male to female or from a real person to a comic figure. The virtual newsreader 33 is not keeping the user up to date about the latest news if he has left the specific news portal. Since the user cannot influence the information the virtual newsreader 33 is providing, the virtual newsreader 33 is not interactive and not able to learn about the user behavior e.g. by interactions.

### Technical purpose of the invention:

The technical purpose of the invention is to find a remedy for the drawbacks according to the state of the art.

### Disclosure of the invention and its advantages:

The invention's technical purpose is met by the proposed method for providing program information about broadcasts on at least one TV-Channel to a user, that is characterized in that a synthesized voice is used to present the program information to the user, wherein an avatar optionally to be shown on a TV-Screen features a talking head speaking with the synthesized voice and wherein the program information and the optional appearing of the avatar on the TV-Screen is independent from the TV-Channel the user is watching.

The Information provided to the user is initially the same like the information provided by an EPG. The main difference is, that the information is not provided by text but by speech. Optionally a simultaneous presentation by text and by speech is possible. Providing the information by speech has the advantage over the state of the art that it can also be provided at the time the user is watching a program on a TV-Channel, e.g. for reminding the user of a broadcast he is interested in. Furthermore the program information presented as speech is also available to visually impaired. It is also familiar to the user to receive program information by a talking head. The talking head according to the invention is the avatar. Another advantage of the invention is that the user can be informed by the avatar about broadcasts on other TV-Channels at the time he is watching a program on another TV-Channel, e.g. for reminding him at the beginning of a favorite broadcast, since the program information and the appearing of the avatar on the TV-Screen is independent of the TV-Channel the user is watching. Furthermore the user gets full TV experience since the program information provided by the avatar is independent of the TV-Channel the user is watching. So he can watch a broadcast he is interested in at the time he is informed about other broadcasts on other TV-Channels he might also be interested in. Moreover a personification is reached by using an avatar featuring a synthesized voice. The functionalities preferably are implemented e.g. in a set top box to be installed at the site of the user, in a TV-Set or in a Server connected with the TV-Set of the user providing the TV video and audio signals, the program information and the avatar with the synthesized voice.

Said method with the specifying features of Claim 1 has the advantage over the state of the art, that:
- The user of an Electronic Program Guide, EPG don't has to read the program information anymore since an avatar tells him which broadcasts are shown on which TV channel.
- The presentation of the program information by the avatar enhances the TV experience people are already used to. It is for TV users very normal that a talking head tells them what broadcasts a TV channel has scheduled for a particular day.
- The embodied EPG is also accessible for the visually impaired, because they are not able to read what is showing on every channel but they can hear it.
- The EPG presented by the avatar is more accessible for people that are not used to work with a computer-like interface, such as the elderly and young children.

In a preferred embodiment of said method, the content of the program information and/or the presentation by the avatar is influenceable by the user.

The user can e.g. abort the presentation by interaction, e.g. by pressing a certain button on his remote control. He can influence the presentation towards content of the EPG he is interested in, e.g. by pushing certain buttons on his remote control to skip information he is not interested in. Preferably the user can influence the content of the presentation according e.g. to a specific airtime or a specific span of airtime. Optionally the interactions of the user are featured as speech interactions.

In a preferred embodiment of said method, the interactions for influencing the presentation by the user are featured as speech interactions.

In a preferred embodiment of said method, the avatar can be used to remind the user of a broadcast the user is interested in independently of the TV-Channel he is watching.

Thereby the avatar appears on the TV-Screen at the time the user is watching a program on another TV-Channel and reminds the user of a specific broadcast the user is interested in.

In another preferred embodiment of said method, the program information presented by the avatar is adapted according to a knowledge about special interests of the user, wherein said knowledge is preferably dynamically adaptive. Said knowledge is e.g. learned from a first time input of the user and/or learned from the programs the user is watching at regular intervals and/or learned from the interactions of the user.

The avatar is using a knowledgebase for providing individual program information matching the special interests of the user. The knowledgebase can be filled manually by the user by providing information about his special interests to the knowledgebase, e.g. via typing on a keyboard or on a remote control or via speech input. Preferable the knowledgebase is dynamically adaptable and expandable according to the behavior of the user, particularly his interaction with the avatar respectively the program information. Thereby the avatar respective the knowledgebase is learning about the interests of the user by the broadcasts he is watching and by the interactions of the user concerning e.g. kind of program, kind of broadcast, name of TV-Show or TV-Soap etc.

The adaptation of the program information can be achieved e.g. by changing the order of the broadcasts to be presented within the program information according to the special interests of the user. Broadcasts the user is highly interested in according to the knowledgebase are presented previous to broadcasts he is never watching.

In another preferred embodiment of said method, the knowledge about special interests of the user is used to advise particular broadcasts matching the special interests of the user to said user.

In another preferred embodiment of said method, the avatar is automatically recording broadcasts to be watched at a later date by the user according to a user interaction or according to the knowledge learned from the user by his interactions or by a first time input.

Thereby the user can instruct the avatar to record particular broadcasts or the avatar is recording said broadcasts independently of user instructions according to the special interests of the user stored in the knowledgebase of the avatar.

In an additional preferred embodiment of said method, avatars of different users at different places are able to exchange user-information concerning e.g. advised broadcasts, advises from one user to another user, broadcasts watched, broadcasts scheduled to be watched and the like.

The exchange of said user-information can be used to establish communities, e.g. special interest groups, wherein members of a community can e.g. advise broadcasts to each other. With the community support it will be very easy for users to see what their friends are watching and/or recording. With the community support it is also possible to recommend broadcasts matching the special interests of a community to the members of said community.

In an additional preferred embodiment of said method, avatars of different users at different places can appear on the same TV-screen, e.g. to advise a certain broadcast to a first user by a second user.

Thereby the second user can send his avatar to the first user. Preferably both users have to be in the same community and the first user has to allow the avatar of the second user to appear on his TV-Screen. This can be governed by the user e.g. by the setting of preferences. Preferably a user is also be able to invite the avatar of another user being member of the same community, but only if the second user allows his/her avatar to visit another user in the same community. This can also be governed by the users e.g. by the setting of preferences.

In an additional preferred embodiment of said method, the character of the avatar can be changed by the user on demand.

Thereby each user can select a certain character of the avatar. By providing different characters of the avatar the user can choose, a higher degree of personification can be reached. It is also thinkable to provide different characters of the avatar to different users using the same TV-Set. Thereby each avatar preferably uses a separate knowledgebase, is his own member of communities and so on. It is also thinkable that the avatars of several users using the same TV-Set establish a community of their own.

A particularly preferred embodiment of said method is characterized in that the program information to be presented to the user by the avatar is gathered from the Internet.

Thereby the program information can be transmitted within the TV-Signal or by a separate Internet connection.

A particularly preferred embodiment of said method is characterized in that the avatar and/or the program information is provided and generated by a service provider, e.g. the operator of a broadband network.

A particularly preferred embodiment of said method is characterized in that different community specific program information adapted to the special interests of certain communities are provided by the service provider.

Thereby the members of a certain community are provided with specific program information already adapted to the special interests of said community. The advantage is, that the program information are either pre selected or are already sorted according to the special interests of said community. The user thereby can get the program information he is interested in faster.

The invention's technical purpose is also met by the proposed device according to claim 14 for providing program information about broadcasts on at least one TV-Channel to a user via a TV-Set, that is characterized in that the device comprises at least means to get program information preferably independent of a TV-Channel the user is watching, means to transform said program information into a synthesized voice to be played back on a TV-Set, means to generate an avatar featuring a talking head speaking with the synthesized voice and optionally to be shown on a TV-Screen and means to superpose the avatar and the synthesized voice with the playback of at least the TV-Channel the user is watching. The playback of the synthesized voice can be optional here, since it might be annoying for a user watching a TV-program. If the voice is turned off, text bubbles are used to inform the user.

By the means to superpose the avatar and the synthesized voice with the playback of the TV-Channel the user is watching the program information to be provided to the user is independent of the TV-Channel the user is watching.

Thereby the user has not to change the TV-Channel to be informed about broadcasts on other TV-Channels.

The means to transform the program information into a synthesized voice can comprise e.g. a text to speech converter provided by a server, e.g. an Internet server, or provided by a computer device within a set top box or within a TV-Set.

The means to superpose the avatar and the synthesized voice with the playback of at least the TV-Channel the user is watching comprise e.g. a receiver for TV-Signals, means to generate TV-like signals of the avatar and the synthesized voice, means to merge the TV-Signals and the TV-like signals of the avatar and the synthesized voice and means to provide the merged signals to a TV-Set. The means to superpose the computer generated avatar and the synthesized voice with the playback of the TV-Channel the user is watching can be part e.g. of a TV-Set, of a set top box or of a server, e.g. an Internet server.

In a preferred embodiment of said device, the device also comprises means for user interactions.

These means comprise a interface or a receiver for e.g. a remote control, a keyboard, a computer mouse, a microphone and the like. By using a microphone, the interactions can be done as speech input. The user interactions afford e.g. to influence the content of the presentation according e.g. to a specific airtime or a specific span of airtime. The means for interactions can also be used to change the character of the avatar.

In a preferred embodiment of said device, the device comprises means to skip program information the user is not interested in.

Skipping of program information can be done manually by the user via the means for user interactions or automatically by a user profile e.g. stored within the device verifying the program information with the special interests of the user. By skipping program information he is not interested in, the user gets the specific program information he is interested in faster.

In a preferred embodiment of said device, the device comprises means to store a user profile.

The user profile comprises information about special interests of the user, e.g. broadcasts the user is interested in, e.g. names of broadcasts and/or themes of broadcasts, e.g. themes of talk shows. The user profile can be used to adapt the program information presented by the avatar according to the special interests of the user. It can also be used to advise certain broadcasts to the user according to his special interests. Watching the user behavior, e.g. watching the user interactions, the broadcasts he is watching to, or by a first time input done by the user, can learn these special interests to be stored in the user profile. Instead of a user profile it is also thinkable to use a knowledgebase that is changed dynamically according to the user behavior, his inputs or the broadcasts he is watching to. The knowledgebase can comprise a database, wherein the database is provided by a server, e.g. an Internet server, or by a storage, e.g. in a set-top box or within a TV-Set. A part of the user profile or of the knowledgebase can be temporarily used to store information about e.g. the beginning of a broadcast the user is interested in or wants to watch. These temporarily stored information can also be used to remind the user on the beginning of a broadcast he is interested in.

Preferably the means for storing the user profile are connected with the means to skip program information the user is not interested in. Thereby providing of individual program information is possible, since it is possible to automatically skip the presentation of broadcasts the user is not interested in according to the user profile. By this embodiment the user is not delayed by information he is not interested in.

In a preferred embodiment of said device, the device comprises means for recording broadcasts and playing back said broadcasts at a later date.

Said means are connected with the means for user interaction and preferably with the means for storing the user profile. The user can instruct the device recording a specific broadcast, e.g. by the means for user interaction. Also an automatic recording of broadcasts is possible by connecting the means for storing a user profile and the means for recording broadcasts and playing back said broadcasts at a later date. The broadcasts to be recorded are selected according to the user profile. The means for recording broadcasts and playing back said broadcasts at a later date can be a storage, e.g. a disk storage on a server, e.g. an Internet server, or a storage in a set top box or a storage within the TV-Set. The means for recording broadcasts and playing back said broadcasts at a later date can also be a video recorder using video cassettes or rewriteable CDs.

In another preferred embodiment of said device, the means to get program information comprise an Internet connection.

The Internet connection can be established e.g. via a phone line, via satellite, or via broadband network also transmitting TV-Signals. It can be established directly or via a server connected to the Internet. Thereby the server can provide the program information gathered from the Internet and permanently updated e.g. by an agent.

In another preferred embodiment of said device, the means to get program information comprise an Internet server e.g. gathering program information from the Internet and/or providing said program information to the user.

In another preferred embodiment of said device, that the internet server provides user and/or community specific program information, wherein a specific user and/or the members of a certain community are provided with specific program information already adapted to the special interests of said user and/or community.

The advantage is, that the program information are either pre selected or are already sorted according to the special interests of said user and/or community. The user thereby can get the program information he is interested in faster.

In another preferred embodiment of said device, the device comprises means to establish a connection to another similar device of another user.

This connection can be e.g. an Internet connection, TV-broadband network connection and the like. By establishing a connection to other similar devices, communities e.g. with the same interests can be established wherein members of the community can e.g. advise particular broadcasts to each other.

In another preferred embodiment of said device, the means to establish a connection to another similar device of another user comprise means to exchange avatars and/or user information and/or advices with other similar devices.

A particularly preferred embodiment of said device is characterized in that the device is at least part of a set top box.

A particularly preferred embodiment of said device is characterized in that the device is at least part of a server, e.g. an internet server or a server connected with the TV-Set of the user and providing the TV video and audio signals, the program information and the avatar with the synthesized voice.

A particularly preferred embodiment of said device is characterized in that the device is at least part of a TV-Set.

Brief description of the drawing, with
- Figure 1: showing a textual Electronic Program Guide according to the state of the art,
- Figure 2: showing a TV-Mosaic according to the state of the art,
- Figure 3: showing a virtual Internet news reader according to the state of the art,
- Figure 4: an avatar featuring a talking head speaking with a synthesized voice according to the invention, wherein the avatar presents program information,
- Figure 5: the avatar shown in Fig. 4 appearing picture in picture at the time a user is watching a TV-Channel,
- Figure 6: the avatar shown in Fig. 4 and 5 exchanging information with an avatar of another user,
- Figure 7: a scheme of community functionality according to the invention, and
- Figure 8: a scheme showing an implementation for streaming the avatar of a user to a set top box on the site of the user.

### Paths for performing the invention:

Figure 4 shows an avatar 1 featuring Bart Simpson who mimics a human talking head. The text bubble 2 shown in Fig. 4 can be used when the audio output of the TV-Set is muted, but will be spoken language during unmuted mode. The information provided by the avatar 1 is independent of the TV-Channel the user is watching. In Fig. 4 the user is not watching a particular TV-Channel. Thereby the TV-Screen 3 showing the avatar 1 also is showing a window 4 showing a preview of the broadcast the avatar 1 is talking about. At the bottom of the TV-Screen a menu bar 7 is shown providing different possibilities of user interaction. The menu bar 7 shows a button 8 for directly changing to the TV-Channel broadcasting the broadcast the avatar 1 is talking from, a button 9 to skip the information, a button 10 to instruct the avatar 1 to record the broadcast actually presented and a button 11 to remind the user at the beginning of the broadcast actually presented.

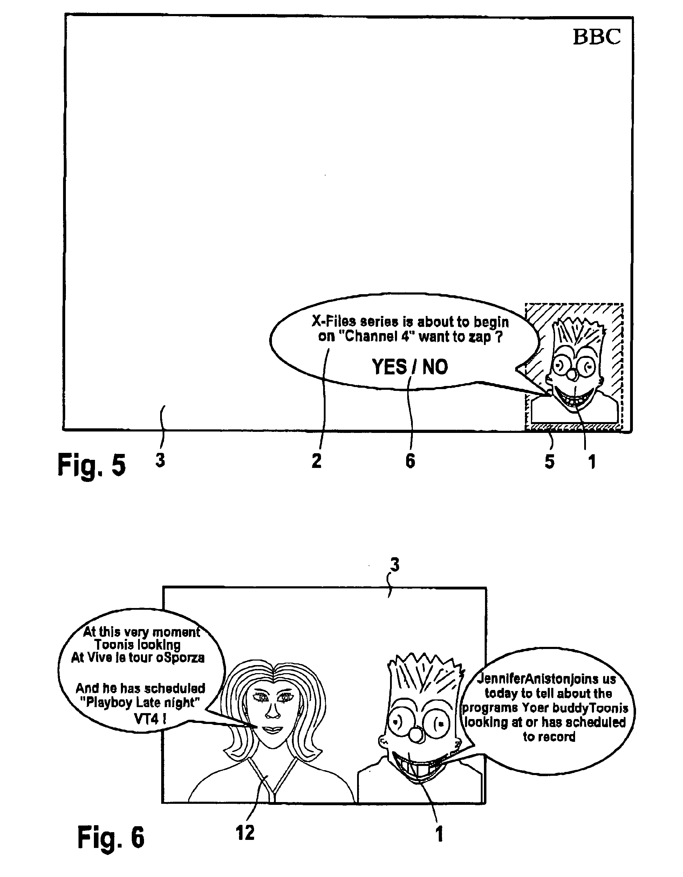

Figure 5 shows the avatar 1 with the text bubble 2 appearing in a window 5 at the time the user is watching a certain broadcast. The avatar 1 appears picture-In-picture with the TV-Channel on the TV-Screen 3. The avatar 1 is reminding the user of a broadcast he is interested in. Within the text bubble 2 a chooser 6 is shown to be used for user interaction. With the chooser 6 the user can stash away the avatar and/or change the TV-Channel actually watched to the TV-Channel broadcasting the reminded broadcast. For this interaction the user can use the color codes on his remote control to zap to the channel in question.

Figure 6 shows the TV-Screen of a first user. The first user has chosen the avatar 1 for presenting program information to him. A second user being a friend of the first user has chosen another avatar 12 for presenting program information to him. Both users are members of the same community and have allowed their avatars 1, 12 to appear on their mutual TV-Screens. The avatar 1 of the first user has invited the avatar 12 of the second user to exchange information about what both users are watching to.

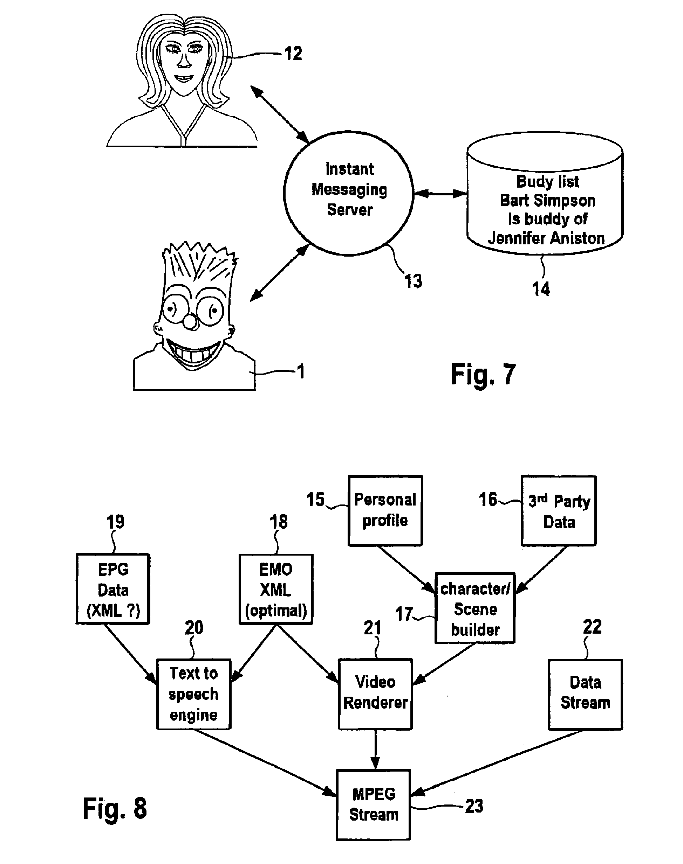

Figure 7 showing an Instant Messaging Server, IMS, 13 providing a database 14 to store information about which avatar 1, 12 is a buddy of another user respective of the avatar 12, 1 of another user.

Figure 8 showing a implementation for streaming the avatar providing the program information to a set-top-box at the site of a user. A user profile 15 is used to store information concerning the special interests of a user and also comprising information about the character of the avatar the user has chosen. The provider of the service can insert 3rd party content 16 like advertising and the like to be used in a character/scene builder 17 creating the avatar. An emotional block 18 is used to add emotional features to the avatar to give him a more realistic look and feel. Both the data of the emotional block 18 and the data of the character/scene builder 17 are provided to a video renderer 21. Electronic Program Guide data 19 are provided in XML and are provided together with the emotional data from the emotional block 18 to a text to speech engine 20. A data stream 22 provides the TV-Signals of all TV-Channels the user is able to receive at his site. The streaming is done the same way regular interactive television applications are streamed to a set-top-box.

The speech output of the text to speech engine 20, the output of the video renderer 21 and the data stream 22 are merged to a MPEG stream to be streamed via a broadband network towards the user.

According to the invention, the program information to be read at current EPGs is now presented by an avatar featuring a talking head speaking with a synthesized voice. The avatar tells the user what TV program is played on each TV-Channel (Fig. 4).

So the avatar is able to provide initially the same content to a user a regular EPG can provide.

Instead of using text and a computer like interface the invention mimics the real human talking heads like during a regular TV broadcast (Fig. 4).

The avatar provides the following information to the user:
- Which TV programs the different TV channels are currently broadcasting. E.g. if the avatar is requested at 16h21, it will tell the user that at the moment BBC is playing snooker, MTV is playing "clips on request", etc.
- Which broadcasts a particular TV channel has scheduled that particular day. The CG character tells the user about the broadcast that is playing at the moment and about the broadcasts that are planned later that day. If the user requests the avatar at 16h21 and asks for the TV listing of a particular TV channel the avatar will start by telling the user what's on at that particular time and what will be broadcasted from that time on. E.g. currently the BBC is playing snooker followed at 17h00 by the series Neighbors, etc.
- On demand, more information about a particular TV show are provided. When the avatar tells the user about a particular TV show on a particular channel, the user can ask the avatar for more information about that TV show. E.g. when the avatar tells the user that the BBC will broadcast the series "Neighbors" at 19h, the user can push a button on his remote control to ask for more information about "Neighbors". The avatar then will tell the user e.g. what is going to happen during that episode, who the actors are, that it is an Australian series, etc. The kind and extend of this information depends on the provider of the EPG.

The avatar is using a knowledge base to adapt itself to the users preferences. Possible ways to do this are e.g.:
- The user fills out a list of preferred TV channels he wants to know what TV shows they are playing when the user requests for the avatar.
- The knowledgebase is dynamically adapted by learning from the user behavior. If the user skips a certain channel often, that TV channel will be shifted to the end of the list of the TV channels the avatar is presenting. TV channels or programs that are not or seldom skipped are in the front of the list. The avatar presents the program information according to the order of said list starting with the broadcasts broadcasted at the time on channels at the top of the list.

Furthermore the avatar is an interactive application. When the user wants to record a TV show the avatar is talking about, the user can use a menu bar (Fig. 4) and an input device to tell the avatar to record the particular TV show. If the user is not interested in a TV show the avatar is talking about, he can use the menu bar and the input device to skip the current explanation and carry on with the next. If the avatar is talking about a TV show that the broadcaster has scheduled later that day the user can use the menu bar and the input device to instruct the avatar to inform/remind him when the TV show begins. Later when this TV show is about to start the avatar will pop up on the TV-Screen telling the user that this particular TV show is about to start and asks the user if he wants to zap to the corresponding TV channel (Fig. 6).

Moreover it is possible to personalize the avatar and to establish a community of avatars respective users. A user is able to easily choose an individual character of his avatar and also to identify the avatars of his friends.

The avatar of a first user is able to invite a second user's avatar to tell the first user about the TV program the second user is watching or even the TV shows the second user has scheduled for recording (Fig. 7). Both users have to allow this communication e.g. by the setting of preferences.

It is also imaginable to advise TV shows to a user. For this advising , the EPG provider can implement a community avatar that will gather the broadcasts the members of a community are watching and/or recording and advise these broadcasts to the members of the community.

The implementation of a community can be done using an Instant Messaging system. An Instant Messaging Server is responsible for sending messages between avatars of users being members of the same community and for keeping track of which avatar has which avatar as buddy. This way the avatar of a first user can exchange EPG information with the avatar of a second user being a buddy of the first user.

The rendering of avatars can be very processor intensive. If a set-top-box to be preferably used to provide the functionality to a user does not have a high-end processor the avatar can be rendered by a service provider as explained with reference to Fig 8. This can be the EPG provider or the broadband provider.

If the set-top-box has a high-end processor and a high quality graphics card an EPG module can be implemented. The EPG module is responsible for requesting EPG data from the EPG provider and to transform it into speech. It is also responsible for rendering the avatar and to convert the avatar into video signals to be used for making the avatar appearing on the TV-Screen. The set top box is also used to transform the content of the EPG into speech and to provide an audio signal to be used for playing back said speech on the TV-Set of the user.

For mid-range set top boxes it is also possible to do the text to speech conversion on a server.

It has to be pointed out that the avatar can be used for advertising, e.g. by clothes the avatar is wearing having logos and the like. Also and the background of the TV-Screen can be used for advertising at the time the user is not watching a certain broadcast.

### Commercial applicability:

The invention is commercially applicable particularly in the field of providing TV-Services via broadband networks.

### List of reference numerals

- 1: Avatar
- 2: Text bubble
- 3: TV-Screen
- 4: Window
- 5: Window
- 6: Chooser
- 7: Menu bar
- 8: Button
- 9: Button
- 10: Button
- 11: Button
- 12: Avatar
- 13: Instant Messaging Server
- 14: Database
- 15: User profile
- 16: Third party content
- 17: Character/scene builder
- 18: Emotional block
- 19: Electronic Program Guide Data
- 20: Text to speech engine
- 21: Video renderer
- 22: Data stream
- 23: MPEG stream
- 24: Superior level
- 25: TV-Channel
- 26: Specific time
- 27: Subordinated level
- 28: Specific information
- 29: Particular TV-Show
- 30: Display of a TV-Screen
- 31: Window
- 32: Screenshot of a TV-Channel
- 33: Virtual newsreader

## Claims

1. Method for providing program information about broadcasts on at least one TV-Channel to a user,
**characterized in**
**that** a synthesized voice is used to present the program information to the user, wherein an avatar optionally to be shown on a TV-Screen features a talking head speaking with the synthesized voice and wherein the program information and the optional appearing of the avatar on the TV-Screen is independent from the TV-Channel the user is watching.

2. Method according to claim 1,
**characterized in**
**that** the content of the program information and/or the presentation by the avatar is influenceable by the user.

3. Method according to claim 2,
**characterized in**
**that** the interactions for influencing the presentation by the user are featured as speech interactions.

4. Method according to claim 1, 2 or 3,
**characterized in**
**that** the avatar can be used to remind the user of a broadcast the user is interested in independently of the TV-Channel he is watching.

5. Method according to one of the previous claims,
**characterized in**
**that** the program information presented by the avatar is adapted according to a knowledge about special interests of the user, wherein said knowledge is preferably dynamically adaptive.

6. Method according to claim 5,
**characterized in**
**that** the knowledge about special interests of the user is used to advise particular broadcasts matching the special interests of the user to said user.

7. Method according to one of the previous claims,
**characterized in**
**that** the avatar is automatically recording broadcasts to be watched at a later date by the user according to a user interaction or according to the knowledge learned from the user by his interactions or by a first time input.

8. Method according to one of the previous claims,
**characterized in**
**that** avatars of different users at different places are able to exchange user-information.

9. Method according to claim 8,
**characterized in**
**that** avatars of different users at different places can appear on the same TV-screen.

10. Method according to one of the previous claims,
**characterized in that** the character of the avatar can be changed by the user on demand.

11. Method according to one of the previous claims,
**characterized in**
**that** the program information to be presented to the user by the avatar is gathered from the Internet.

12. Method according to one of the previous claims,
**characterized in**
**that** the avatar and/or the program information is provided and generated by a service provider, e.g. the operator of a broadband network.

13. Method according to claim 12,
**characterized in**
**that** different community specific program information adapted to the special interests of certain communities are provided by the service provider.

14. Device for providing program information about broadcasts on at least one TV-Channel to a user via a TV-Set,
**characterized in**
**that** the device comprises at least means to get program information, means to transform said program information into a synthesized voice to be played back on a TV-Set, means to generate an avatar featuring a talking head speaking with the synthesized voice and optionally to be shown on a TV-Screen and means to superpose the avatar and the synthesized voice with the playback of at least the TV-Channel the user is watching.

15. Device according to claim 14
**characterized in that** the device also comprises means for user interactions.

16. Device according to claim 14 or 15
**characterized in**
**that** the device comprises means to skip program information the user is not interested in.

17. Device according to claim 14, 15 or 16,
**characterized in that** the device comprises means to store a user profile.

18. Device according to one of the claims 14 to 17,
**characterized in**
**that** the device comprises means for recording broadcasts and playing back said broadcasts at a later date.

19. Device according to one of the claims 14 to 18,
**characterized in**
**that** the means to get program information comprise an Internet connection.

20. Device according to claim 19,
**characterized in**
**that** the means to get program information comprise an Internet server e.g. gathering program information from the Internet and/or providing said program information to the user.

21. Device according to claim 20,
**characterized in**
**that that** the internet server provides user and/or community specific program information, wherein a specific user and/or the members of a certain community are provided with specific program information already adapted to the special interests of said user and/or community.

22. Device according to one of the claims 14 to 21,
**characterized in**
**that** the device comprises means to establish a connection to another similar device of another user.

23. Device according to claim 22,
**characterized in**
**that** the means to establish a connection to another similar device of another user comprise means to exchange avatars and/or user information and/or advices with other similar devices.

24. Device according to one of the claims 14 to 23,
**characterized in**
**that** the device is at least part of a set top box.

25. Device according to one of the claims 14 to 24,
**characterized in that** the device is at least part of a server.

26. Device according to one of the claims 14 to 25,
**characterized in**
**that** the device is at least part of a T1/-Set.
